# EUROPÄISCHE PATENTSCHRIFT

(11) **EP 2 181 842 B1**
(45) Veröffentlichungstag und Bekanntmachung des Hinweises auf die Patenterteilung: **26.06.2019**
(21) Anmeldenummer: 09171065.7
(22) Anmeldetag: 23.09.2009
(51) Int. Cl.: B32B 25/00, B32B 7/12, B32B 25/12, B32B 25/18, B32B 25/20, B32B 27/28, B32B 27/34, B32B 27/40, B32B 1/02, A62D 5/00, D06N 3/18, A62B 17/00, B32B 25/14, B32B 25/16, B32B 25/08, B32B 27/12, B32B 27/08

(54) **MEHRSCHICHTIGE STOFFBAHN, INSBESONDERE SCHUTZANZUGSTOFF**
MULTI-LAYERED SHEET OF MATERIAL, IN PARTICULAR PROTECTIVE OVERALLS MATERIAL
BANDE DE TISSU MULTICOUCHE, NOTAMMENT MATIÈRE POUR HABIT DE PROTECTION

(30) Priorität: 29.10.2008 DE 102008037491
(43) Veröffentlichungstag der Anmeldung: 05.05.2010
(73) Patentinhaber: ContiTech Elastomer-Beschichtungen GmbH, 30165 Hannover (DE)
(72) Erfinder: Weber, Thomas, 37115, Duderstadt (DE); Gerlach, Torsten, 37154, Northeim (DE); Overkamp, Andre, 37434, Obernfeld (DE)
(74) Vertreter: Finger, Karsten

(56) Entgegenhaltungen:
- DE-A1- 2 215 399
- DE-A1- 3 907 453
- DE-A1-102007 002 560
- DE-U1- 9 012 382

## Beschreibung

Die Erfindung betrifft eine mehrschichtige Stoffbahn zur Bildung von flexiblen Behältern, Planen, Schutzanzügen, Membranen und dergleichen, wobei der Schutzanzugstoff von besonderer Bedeutung ist.

Eine derartige Stoffbahn ist nach dem Stand der Technik mit einer Barriereschicht ausgestattet, wobei bislang als Werkstoffe insbesondere ein Polyamid (PA), Polyimid (PI) oder ein fluorhaltiger Kunststoff, beispielsweise Polyvinylfluorid (PVF) oder Polyvinylidenfluorid (PVDF), zum Einsatz gelangten. Entwicklungsschwerpunkt bildeten dabei Barriereschichten aus PVF und PVDF, neuerdings auch Barriereschichten aus einem Polymeren auf Basis von Ethylenvinylalkohol (EVOH). Hinsichtlich des wesentlichen Gesamtstandes der Technik um die Barriereschichten wird insbesondere auf folgende Patentliteratur verwiesen:
DE 90 12 382 U1
DE 29 18 923 A1
DE 39 07 453 A1
DE 41 35 731 A1
DE 42 32 947 A1
DE 10 2007 002 560 A1
DE 10 2008 045 588 A1
WO 94/11187 A

Die Offenlegungsschrift DE 10 2007 002 560 A1 beschreibt eine mehrschichtige Stoffbahn, wonach die Stoffbahn eine Festigkeitsträgerschicht und eine Elastomerschicht umfasst, die die jeweiligen Oberflächenschichten bilden. Zwischen der Festigkeitsträgerschicht und der Elastomerschicht ist eine Barriereschicht aus Polyamid angeordnet. Auf die Barriereschicht ist dabei beidseitig ein Haftvermittler aufgebracht, und zwar unter Ausbildung einer ersten und zweiten Haftschicht. Diese mehrschichtige Stoffbahn ist insbesondere für Chemikalienanzüge mit militärischer (Poncho) und ziviler Anwendung sowie als Panzerplanen und Maskentaschenstoffe geeignet.

Die DE 39 07 453 A1 beschreibt einen beschichteten Textilstoff bestehend aus mindestens einer textilen Trägerbahn und mindestens einer äußeren flexiblen Gummi- oder Kunststoffschicht, dadurch gekennzeichnet, dass mindestens eine zusätzliche Polyimidschicht angeordnet ist, die mit hoher Haftung an die jeweils benachbarte Schicht gebunden ist.

Unter Gesamtbetrachtung des Standes der Technik erfüllen die zur Zeit auf dem Markt erhältlichen Schutzanzugstoffe unterschiedliche Anforderungen wie Permeationsbeständigkeit, Temperaturbeständigkeit und Chemikalienbeständigkeit. Diese Stoffe stoßen, je nach Materialauswahl, bei einzelnen Anforderungen an Grenzen. Da die Barrierefolie der heutigen Stoffe nur durch eine dünne Elastomerschicht vor äußeren Einflüssen (Kratzer, Stiche usw.) geschützt ist, kann es relativ schnell zu einer oberflächlichen Zerstörung der Barrierefolie kommen. Der Träger eines Schutzanzuges ist dann nur noch ungenügend gegen das Eindringen von Chemikalien geschützt, was schwerwiegende gesundheitliche Folgen für den Träger haben kann.

Im Rahmen einer Weiterentwicklung besteht daher die Aufgabe der Erfindung darin, eine mehrschichtige Stoffbahn, insbesondere einen Schutzanzugstoff, bereitzustellen, die/der sich durch ein verbessertes Gesamtbild im Hinblick auf Permeationseigenschaften, Hitzebeständigkeit und Chemikalienbeständigkeit an der Stoffoberfläche auszeichnet, verbunden mit einem verbesserten Schutz. Darüber hinaus soll die Stoffbahn leichter und flexibler werden.

Gelöst wird diese Aufgabe durch einen Schichtenaufbau nach Anspruch 1.

Bei einem derartigen Schichtenaufbau unter Einsatz einer ersten und zweiten Barrierefolie kann man auf eine gasundurchlässige Elastomerschicht verzichten. Bei deutlich besseren Permeationswerten wird daher die Stoffbahn leichter und flexibler, was für den Träger eines Schutzanzuges von Vorteil ist.

Die heutigen Stoffbahnen sind nicht symmetrisch aufgebaut. Durch ein mehr oder weniger starkes Aufrollen des Materials kommt es in der Konfektion der Stoffe oft zu Handhabungsproblemen. Mit der neuartigen Stoffbahn lässt sich dagegen ein symmetrisches Schichtenkonzept realisieren, und zwar unter Vermeidung eines Rolleffektes.

Die Außenschicht und Innenschicht bestehen zumeist aus einer vulkanisierten Kautschukmischung, enthaltend wenigstens eine Kautschukkomponente und Mischungsingredienzien. Als Kautschukkomponenten sind insbesondere zu nennen:
Ethylen-Propylen-Mischpolymerisat (EPM)
Ethylen-Propylen-Dien-Mischpolymerisat (EPDM)
Nitrilkautschuk (NBR)
(teil)hydrierter Nitrilkautschuk (HNBR)
Fluor-Kautschuk (FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Siliconkautschuk (Typen MQ, VMQ, PVMQ, FVMQ)
Fluorierter Methylsiliconkautschuk (FMQ)
Perfluorinierter Propylen-Kautschuk (FFPM)
Perfluorcarbon-Kautschuk (FFKM)
Polyurethan (PU)

Auch der Einsatz eines Verschnittes, insbesondere in Verbindung mit einem der vorgenannten Kautschuktypen, beispielsweise ein NR/SBR-Verschnitt, ist möglich.

Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente). Diesbezüglich wird auf den allgemeinen Stand der Mischungstechnologie verwiesen.

Diese Kautschukmischungen sind gut verarbeitbar und kalandrierbar. Darüber hinaus sind sie verträglich mit den Barrierewerkstoffen, die noch näher vorgestellt werden. Diese Kautschukmischungen sind zudem einem hitze- und chemikaliebeständigen Werkstoffkonzept zugänglich, was insbesondere für die Außenschicht von Bedeutung ist.

Im Folgenden werden für die einzelnen Schichten der Stoffbahn die vorteilhaften Werkstoffgesichtspunkte näher vorgestellt.

### Außenschicht

Die Außenschicht besteht aus einer vulkanisierten Kautschukmischung, wobei es hinsichtlich des Einsatzes entsprechender Kautschukkomponenten eine Vielzahl von Möglichkeiten gibt. Diesbezüglich wird auf die bereits erwähnte umfangreiche Komponentenauflistung verwiesen. Die Kautschukkomponente der Außenschicht ist insbesondere ein Fluorkautschuk (FKM) oder ein Chlorsulfoniertes Polyethylen (CSM).

Der Kautschukmischung der Außenschicht ist ein hitze- und chemikalienbeständiger fluorhaltiger Kunststoff in Pulverform beigemischt. Zu nennen ist hier Polytetrafluorethylen (PTFE). Auch ist es vorteilhaft, wenn ein Füllstoff in Pulverform beigemischt wird, der neben der Hitze- und Chemikalienbeständigkeit auch flammhemmende Eigenschaften aufweist. Ein derartiger Füllstoff ist vorzugsweise ein anorganisches Material der folgenden Gruppen (A, B, C):
(A) Metallcarbonate: Calciumcarbonat, Magnesiumcarbonat
(B) Metallhydroxide: Calciumhydroxid, Magnesiumhydroxid, Aluminiumhydroxid
(C) Glas, Quarz

Auch eine Kombination der hier genannten Materialien der Gruppen (A, B, C), beispielsweise Calciumcarbonat und Magnesiumhydroxid, kann eingesetzt werden, gegebenenfalls auch in Verbindung mit PTFE. Diese Füllstoffe zeichnen sich durch eine hohe Polarität aus, verbunden mit einer optimalen Wechselwirkung mit den polaren Atomen bzw. Gruppen des Kautschuks, so dass diese Füllstoffe gleichmäßig in die Kautschukmischung einmischbar sind.

### Innenschicht

Die Innenschicht besteht ebenfalls aus einer vulkanisierten Kautschukmischung, wobei es auch hier hinsichtlich des Einsatzes entsprechender Kautschukkomponenten eine Vielzahl von Möglichkeiten gibt. Diesbezüglich wird ebenfalls auf die bereits erwähnte umfangreiche Komponentenauflistung verwiesen. Die Kautschukkomponente der Innenschicht ist insbesondere ein Naturkautschuk (NR), Chloropren-Kautschuk (CR), Butylkautschuk (IIR), Chlorbutylkautschuk (CIIR), Brombutylkautschuk (IIR), Styrol-Butadien-Kautschuk (SBR), Chlorsulfoniertes Polyethylen (CSM), Ethylen-Vinylacetat-Kautschuk (EVA) oder ein Fluorkautschuk (FKM).

### Festigkeitsträgerschicht

Die Festigkeitsträgerschicht, die aus einem textilen Werkstoff besteht, kann ein- oder mehrlagig ausgebildet sein, wobei zumeist die einlagige Ausführung unter dem Aspekt der Gewichtsreduzierung zum Einsatz gelangt. Die Festigkeitsträgeschicht liegt dabei insbesondere als Gewebeschicht, umfassend Kette und Schuss, vor. Der textile Werkstoff ist ein Polyamid (z.B. PA 6, PA 6.6) und/oder ein Polyester (PES) und/oder ein Aramid (z.B. Para-Aramid). Das Gewebe kann beispielsweise ein PA-Gewebe oder ein PA/PES-Gewebe sein. Die Festigkeitsträgerschicht kann zudem haftfreundlich präpariert sein. Diesbezüglich wird auf den allgemeinen Stand der Festigkeitsträgertechnologie verwiesen.

### Barriereschicht

Die erste Barriereschicht ist zwischen der Außenschicht und der Festigkeitsträgerschicht angeordnet. Die Einbettung der zweiten Barriereschicht erfolgt zwischen der Festigkeitsträgerschicht und der Innenschicht. Die Festigkeitsträgerschicht ist somit bei der neuen Stoffbahn beidseitig mit einer Barriereschicht versehen.

Die Barriereschicht muss sich durch eine niedrige Permeation auszeichnen. Der Optimierung der Diffusionsbarrierecharakteristik, insbesondere unter dem Aspekt der Gift- und Kampfstoffabwehr, ist daher in der Vergangenheit bereits ein breiter Entwicklungsraum gewidmet worden. Die Barriereschicht umfasst dabei wenigstens eine Folienschicht, wobei folgende beiden Varianten (I, II) von Bedeutung sind:
(I) Die Barriereschicht umfasst eine einzige Folienschicht (Einzelfolie).
(II) Die Barriereschicht ist ein Folienverbund, gebildet aus wenigstens zwei Folienschichten, insbesondere unter dem Aspekt eines Zwei-Folien-Verbundes.

Als Folienwerkstoffe kommen ein Polyamid (PA), Polyethylen (PE), Polypropylen (PP), ein Fluorkunststoff, ein Polymer auf Basis von Ethylenvinylalkohol (EVOH), ein Polyvinylalkohol (PVOH) oder ein Polyetheretherketon (PEEK) zum Einsatz. Von besonderer Bedeutung ist ein Polyamid, wobei hier wiederum folgende Polyamidtypen zur Anwendung gelangen:
Polyamid 6
Polyamid 6.6
Polyamid 11
Polyamid 12
Polyamid 6.10
Polyamid 6.12
Copolyamide

Bei den Fluorkunststoffen sind insbesondere Polytetrafluorethylen (PTFE), Polyvinylfluorid (PVF) und Polyvinylidenfluorid (PVDF) zu nennen.

Bei der Variante (II) besteht vorzugsweise wenigstens eine Folienschicht aus einem Polyamid (PA) der oben genannten Typen, einem Polyethylen (PE), Polypropylen (PP), einem Fluorkunststoff der oben genannten Typen, einem Polymer auf Basis von Ethylenvinylalkohol (EVOH), einem Polyvinylalkohol (PVOH) oder einem Polyetheretherketon (PEEK). Von besonderer Bedeutung ist ein PA/EVOH-Folienverbund oder ein PI/EVOH-Folienverbund. Auch ein dreischichtiger Folienverbund, beispielsweise ein PA/EVOH/PA-Folienverbund, ist realisierbar. Mit einem Folienverbund kann eine Null-Permeation erzielt werden.

Die erste und zweite Barriereschicht weisen jeweils eine Stärke von 0,01 mm bis 2 mm auf, wobei bei beiden Varianten (I, II), insbesondere nach Variante (I) bei einer geringen Stärke von 0,003 mm bis 0,050 mm hochwirksame Barriereschichten realisierbar sind, verbunden mit einer Gewichtsreduzierung der Stoffbahn.

Die Barriereschicht kann ein- oder beidseitig haftfreundlich präpariert sein, insbesondere unter dem Aspekt der Oberflächenaktivierung, wobei hier insbesondere wiederum das Anätzen oder Aufrauen zu nennen sind. Von besonderer Bedeutung ist dabei das Anätzen. Die Oberflächenveränderung bzw. Oberflächenbehandlung durch Anätzen erfolgt nach bekannten chemischen oder physikalischen Methoden, beispielsweise mittels Flammenbehandlung, Corona-Entladung, Sputtering, Plasmabehandlung, Natrium-Ammoniak-Verfahren oder Natrium-Naphthalin-Verfahren. Hinsichtlich Details wird auf den diesbezüglichen und umfassenden Stand der Technik verwiesen. Auf diese Weise wird bei der Vulkanisation ein besonders dauerfester Haftverbund der Barriereschicht mit der Außenschicht bzw. Innenschicht erzielt.

Als Alternative oder in Kombination mit der oben vorgestellten Oberflächenaktivierung kann die Barriereschicht auch ein- oder beidseitig mit einer Haftschicht in Verbindung stehen, beispielsweise auf der Basis einer Kautschukmischung nach der Lehre gemäß DE 10 2007 002 560 A1.

Die Erfindung wird nun anhand eines Ausführungsbeispieles unter Bezugnahme auf eine schematische Zeichnung erläutert.

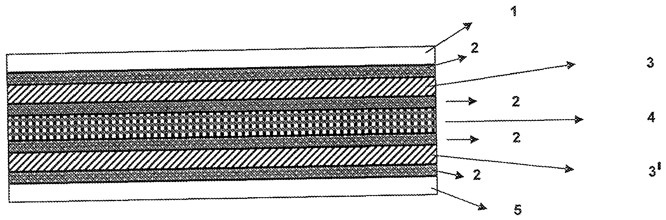

Nach der einzigen Figur umfasst die symmetrisch aufgebaute Stoffbahn eine Außenschicht 1 aus einer hitze- und chemikalienbeständigen vulkanisierten Kautschukmischung, beispielsweise auf der Basis von FKM, sowie eine Innenschicht 5 aus ebenfalls einer vulkanisierten Kautschukmischung, beispielsweise auf der Basis von CSM. Zwischen der Außenschicht 1 und der Innenschicht 5 ist eine Festigkeitsträgerschicht 4, insbesondere in Form einer einlagigen Gewebeschicht aus einem textilen Werkstoff, beispielsweise ein PA-Gewebe, angeordnet.

Zwischen der Außenschicht 1 und der Festigkeitsträgerschicht 4 ist eine erste Barriereschicht 3 angeordnet, die wenigstens eine Folienschicht umfasst. Ferner ist zwischen der Festigkeitsträgerschicht 4 und der Innenschicht 5 eine zweite Barriereschicht 3' eingebettet. Hinsichtlich der zahlreichen Gestaltungsmöglichkeiten der Barriereschicht wird auf die bereits in Verbindung mit den Folienwerkstoffen genannte Lehre verwiesen.

Die beiden Barriereschichten 3 und 3' sind bei diesem Ausführungsbeispiel jeweils beidseitig mit einer Haftschicht 2 versehen. Hinsichtlich Details wird auf die bereits erwähnte Offenlegungsschrift DE 10 2007 002 560 A1 verwiesen.

Anstelle der Haftschichten 2 kann die Barriereschicht auch oberflächenaktiviert sein, und zwar nach den oben zitierten Methoden.

Die neue mehrschichtige Stoffbahn zeichnet sich zusammenfassend durch folgende Vorteile aus:
- Verbesserung der Permeationseigenschaft, insbesondere im Hinblick auf ein Null-Permeation;
- Verbesserung der Sicherheit und des Tragekomfortes bei Schutzanzügen;
- Konfektionsoptimierung durch symmetrischen Aufbau;
- Gewichts- und Dickenreduzierung bei erhöhter Flexibilität;
- viele Anwendungsmöglichkeiten, wobei neben dem schwerpunktmäßigen Einsatzbereich für Schutzanzüge auch Zelte, Planen, beispielsweise Deponieplanen und Panzerplanen, sowie Membranen, beispielsweise Gasspeichermembranen und Kraftstoffinembranen, zu erwähnen sind.

### Bezugszeichenliste

### (Teil der Beschreibung)

- 1: Außenschicht in Form einer Elastomerschicht
- 2: Haftschicht
- 3: erste Barrierschicht (Einzelfolie, Folienverbund)
- 3': zweite Barrierschicht (Einzelfolie, Folienverbund)
- 4: Festigkeitsträgerschicht, insbesondere Gewebeschicht
- 5: Innenschicht in Form einer Elastomerschicht

## Patentansprüche

1. Mehrschichtige Stoffbahn zur Bildung von flexiblen Behältern, Planen, Schutzanzügen, Membranen und dergleichen, **gekennzeichnet durch** einen Schichtenaufbau mit wenigstens folgenden Schichten:
- einer Außenschicht (1) aus einem verarbeitbaren sowie hitze- und chemikalienbeständigen elastomeren Werkstoff;
- einer Innenschicht (5) aus einem verarbeitbaren elastomeren Werkstoff;
- einer Festigkeitsträgerschicht (4), die zwischen der Außenschicht (1) und der Innenschicht (5) angeordnet und ein- oder mehrlagig ausgebildet ist, wobei die Festigkeitsträgerschicht aus einem textilen Werkstoff besteht, der Polyamid (PA) und/oder ein Polyester (PES) und/oder ein Aramid ist; sowie
- einer ersten und zweiten Barriereschicht (3, 3') mit jeweils niedriger Permeation, wobei die erste Barriereschicht (3) zwischen der Außenschicht (1) und der Festigkeitsträgerschicht (4) und die zweite Barriereschicht (3') zwischen der Festigkeitsträgerschicht (4) und der Innenschicht (5) angeordnet ist, wobei ferner die erste und zweite Barriereschicht (3, 3') jeweils wenigstens eine Folienschicht umfassen, wobei jeweils wenigstens eine Folienschicht als Werkstoff Polyamid (PA), Polyethylen (PE), Polypropylen (PP), ein Fluorkunststoff, ein Polymer auf Basis von Ethylenvinylalkohol (EVOH), ein Polyvinylalkohol (PVOH) oder ein Polyetheretherketon (PEEK) umfasst,
wobei die Außenschicht (1) und die Innenschicht (5) aus einer vulkanisierten Kautschukmischung bestehen, enthaltend wenigstens eine Kautschukkomponente und Mischungsingredienzien und wobei zumindest der Kautschukmischung der Außenschicht (1) ein hitze- und chemikalienbeständiger fluorhaltiger Kunststoff in Pulverform beigemischt ist.

2. Mehrschichtige Stoffbahn nach Anspruch 1, **dadurch gekennzeichnet, dass** die Kautschukkomponente ein Ethylen-Propylen-Mischpolymerisat (EPM), ein Ethylen-Propylen-Dien-Mischpolymerisat (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Butadien-Kautschuk (BR), Chloriertes Polyethylen (CM), Chlorsulfoniertes Polyethylen (CSM), Polyepichlorydrin (ECO), Ethylen-Vinylacetat-Kautschuk (EVA), Acrylat-Kautschuk (ACM), Siliconkautschuk (MQ, VMQ, PVMQ, FVMQ), Fluorierter Methylsiliconkautschuk (FMQ), Perfluorinierter Propylen-Kautschuk (FFPM), Perfluorcarbon-Kautschuk (FFKM) oder Polyurethan (PU) ist, gegebenenfalls unter Einsatz eines Verschnittes, insbesondere in Verbindung mit einem der vorgenannten Kautschuktypen.

3. Mehrschichtige Stoffbahn nach einem der Ansprüche 1 bis 2, **dadurch gekennzeichnet, dass** zumindest der Kautschukmischung der Außenschicht (1) ein hitze- und chemikalienbeständiger sowie flammhemmender Füllstoff in Pulverform beigemischt ist.

4. Mehrschichtige Stoffbahn nach einem der Ansprüche 1 bis 3, **dadurch gekennzeichnet, dass** die Festigkeitsträgerschicht (4) eine Gewebeschicht ist.

5. Mehrschichtige Stoffbahn nach einem der Ansprüche 1 bis 4, **dadurch gekennzeichnet, dass** die erste und/oder zweite Barriereschicht (3, 3') eine einzige Folienschicht umfasst.

6. Mehrschichtige Stoffbahn nach einem der Ansprüche 1 bis 4, **dadurch gekennzeichnet, dass** die erste und/oder zweite Barriereschicht (3, 3') ein Folienverbund sind, gebildet aus wenigstens zwei Folienschichten.

7. Mehrschichtige Stoffbahn nach einem der Ansprüche 1 bis 6, **dadurch gekennzeichnet, dass** die erste und zweite Barriereschicht (3, 3') jeweils ein- oder beidseitig haftfreundlich präpariert sind.

8. Mehrschichtige Stoffbahn nach Anspruch 7, **dadurch gekennzeichnet, dass** die erste und zweite Barriereschicht (3, 3') jeweils oberflächenaktiviert sind.

9. Mehrschichtige Stoffbahn nach einem der Ansprüche 1 bis 8, **dadurch gekennzeichnet, dass** die erste und zweite Barriereschicht (3, 3') jeweils ein- oder beidseitig mit einer Haftschicht (2) in Verbindung stehen.

## Claims

1. Multilayered web for forming flexible containers, tarpaulins, protective suits, membranes and the like, **characterized by** a layer construction having at least the following layers:
- an outerlayer (1) made of a workable and heat- and chemicals-resistant elastomeric material;
- an innerlayer (5) made of a workable elastomeric material;
- a single- or multi-ply strength member layer (4) arranged between the outerlayer (1) and the innerlayer (5), wherein the strength member layer is made of a textile material which is polyamide (PA) and/or a polyester (PES) and/or an aramid; and
- a first and second barrier layer (3, 3') each having a low permeation, wherein the first barrier layer (3) is arranged between the outerlayer (1) and the strength member layer (4) and the second barrier layer (3') is arranged between the strength member layer (4) and the innerlayer (5), wherein the first and the second barrier layer (3, 3') moreover each comprise at least one film layer, wherein each at least one film layer comprises as a material of construction polyamide (PA), polyethylene (PE), polypropylene (PP), a fluoroplastic, a polymer based on ethylene vinyl alcohol (EVOH), a polyvinyl alcohol (PVOH) or a polyether ether ketone (PEEK),
wherein the outerlayer (1) and the innerlayer (5) are made of a vulcanized rubber mixture containing at least one rubber component and mixture ingredients and wherein at least the rubber mixture of the outerlayer (1) has a pulverulent heat- and chemicals-resistant fluorine-containing plastic blended with it.

2. Multilayered web according to Claim 1, **characterized in that** the rubber component is an ethylenepropylene mixed polymer (EPM), an ethylenepropylene-diene mixed polymer (EPDM), nitrile rubber (NBR), (partially) hydrogenated nitrile rubber (HNBR), fluorine rubber (FKM), chloroprene rubber (CR), natural rubber (NR), styrene-butadiene rubber (SBR), isoprene rubber (IR), butyl rubber (IIR), bromobutyl rubber (BIIR), chlorobutyl rubber (CIIR), butadiene rubber (BR), chlorinated polyethylene (CM), chlorosulfonic acid polyethylene (CSM), polyepichlorohydrin (ECO), ethylene-vinyl acetate rubber (EVA), acrylate rubber (ACM), silicone rubber (MQ, VMQ, PVMQ, FVMQ), fluorinated methylsilicone rubber (FMQ), perfluorinated propylene rubber (FFPM), perfluorocarbon rubber (FFKM) or polyurethane (PU), optionally using a blend, in particular in conjunction with any of the abovementioned rubber types.

3. Multilayered web according to either of Claims 1 and 2, **characterized in that** at least the rubber mixture of the outerlayer (1) has a pulverulent heat- and chemicals-resistant and also flame retardant filler blended with it.

4. Multilayered web according to any of Claims 1 to 3, **characterized in that** the strength member layer (4) is a fabric layer.

5. Multilayered web according to any of Claims 1 to 4, **characterized in that** the first and/or second barrier layer (3, 3') comprises a single film layer.

6. Multilayered web according to any of Claims 1 to 4, **characterized in that** the first and/or second barrier layer (3, 3') is a film composite formed from at least two film layers.

7. Multilayered web according to any of Claims 1 to 6, **characterized in that** both the first and second barrier layer (3, 3') have been given an adhesion-friendly preparation on one or both sides.

8. Multilayered web according to Claim 7, **characterized in that** both the first and second barrier layer (3, 3') are surface-activated.

9. Multilayered web according to any of Claims 1 to 8, **characterized in that** both the first and second barrier layer (3, 3') are in contact with an adhesion promoter layer (2) on one or both sides.

## Revendications

1. Bande de matière multicouche pour la formation de contenants flexibles, de bâches, d'équipements de protection, de membranes et analogues, **caractérisée par** une structure de couches comprenant au moins les couches suivantes :
- une couche extérieure (1) en un matériau élastomère usinable, ainsi que résistant à la chaleur et aux produits chimiques ;
- une couche intérieure (5) en un matériau élastomère usinable ;
- une couche de renfort (4), qui est agencée entre la couche extérieure (1) et la couche intérieure (5), et qui est configurée à une ou plusieurs couches, la couche de renfort étant constituée par un matériau textile, qui est un polyamide (PA) et/ou un polyester (PES) et/ou un aramide ; ainsi que
- une première et une deuxième couche de barrière (3, 3') ayant chacune une faible perméation, la première couche de barrière (3) étant agencée entre la couche extérieure (1) et la couche de renfort (4) et la deuxième couche de barrière (3') étant agencée entre la couche de renfort (4) et la couche intérieure (5), la première et la deuxième couche de barrière (3, 3') comprenant en outre chacune au moins une couche de feuille, au moins une couche de feuille comprenant à chaque fois en tant que matériau un polyamide (PA), un polyéthylène (PE), un polypropylène (PP), un plastique fluoré, un polymère à base d'éthylène-alcool vinylique (EVOH), un alcool polyvinylique (PVOH) ou une polyéther-éther-cétone (PEEK),
la couche extérieure (1) et la couche intérieure (5) étant constituées par un mélange de caoutchouc vulcanisé, contenant au moins un composant caoutchouc et des ingrédients de mélange, et une matière plastique fluorée résistante à la chaleur et aux produits chimiques étant incorporée sous forme de poudre au moins dans le mélange de caoutchouc de la couche extérieure (1).

2. Bande de matière multicouche selon la revendication 1, **caractérisée en ce que** le composant caoutchouc est un copolymère d'éthylène-propylène (EPM), un copolymère d'éthylène-propylène-diène (EPDM), un caoutchouc de nitrile (NBR), un caoutchouc de nitrile (partiellement) hydrogéné (HNBR), un caoutchouc fluoré (FKM), un caoutchouc de chloroprène (CR), un caoutchouc naturel (NR), un caoutchouc de styrène-butadiène (SBR), un caoutchouc d'isoprène (IR), un caoutchouc de butyle (IIR), un caoutchouc de bromobutyle (BIIR), un caoutchouc de chlorobutyle (CIIR), un caoutchouc de butadiène (BR), un polyéthylène chloré (CM), un polyéthylène chlorosulfoné (CSM), une polyépichlorhydrine (ECO), un caoutchouc d'éthylène-acétate de vinyle (EVA), un caoutchouc d'acrylate (ACM), un caoutchouc de silicone (MQ, MVQ, PVMQ, FVMQ), un caoutchouc de méthylsilicone fluoré (FMQ), un caoutchouc de propylène perfluoré (FFPM), un caoutchouc de perfluorocarbone (FFKM)ou un polyuréthane (PU), éventuellement en utilisant une coupe, notamment en association avec un des types de caoutchouc susmentionnés.

3. Bande de matière multicouche selon l'une quelconque des revendications 1 à 2, **caractérisée en ce qu'**une charge résistante à la chaleur et aux produits chimiques, ainsi qu'ignifuge, est incorporée sous la forme de poudre au moins dans le mélange de caoutchouc de la couche extérieure (1).

4. Bande de matière multicouche selon l'une quelconque des revendications 1 à 3, **caractérisée en ce que** la couche de renfort (4) est une couche de tissu.

5. Bande de matière multicouche selon l'une quelconque des revendications 1 à 4, **caractérisée en ce que** la première et/ou la deuxième couche de barrière (3, 3') comprennent une couche de feuille individuelle.

6. Bande de matière multicouche selon l'une quelconque des revendications 1 à 4, **caractérisée en ce que** la première et/ou la deuxième couche de barrière (3, 3') consistent en une feuille composite, formée par au moins deux couches de feuille.

7. Bande de matière multicouche selon l'une quelconque des revendications 1 à 6, **caractérisée en ce que** la première et la deuxième couche de barrière (3, 3') sont chacune préparées sur un des ou les deux côtés de manière à favoriser l'adhésion.

8. Bande de matière multicouche selon la revendication 7, **caractérisée en ce que** la première et la deuxième couche de barrière (3, 3') sont chacune activées en surface.

9. Bande de matière multicouche selon l'une quelconque des revendications 1 à 8, **caractérisée en ce que** la première et la deuxième couche de barrière (3, 3') sont chacune reliées d'un ou des deux côtés à une couche d'adhésion (2).
